# EUROPEAN PATENT APPLICATION

(11) **EP 4 354 294 A2**
(43) Date of publication of application: **17.04.2024**
(21) Application number: 23203372.0
(22) Date of filing: 13.10.2023
(51) Int. Cl.: G06F 9/50, B60W 50/00, G06F 15/00

(54) **VEHICLE PROCESSING AND CONNECTIVITY**

(30) Priority: 14.10.2022 US 202263379520 P
(71) Applicant: Polaris Industries Inc., Medina, MN 55340 (US)
(72) Inventor: TURNER, Carl, Portland, Oregon, 97239 (US); SWITZER, David, Seattle, Washington, 98122 (US)
(74) Representative: reuteler & cie SA

(57) **Abstract**

Systems and methods for vehicle communication are provided, for example to provide various processing and connectivity functionality according to hardware availability, power constraints, and environmental conditions, among other examples.

## Description

### CROSS-REFERENCE TO RELATED APPLICATION

This application claims the benefit of the U.S. Provisional Patent Application No. 63/379,520, filed October 14, 2022, titled "Vehicle Processing and Connectivity," the contents of which are expressly incorporated by reference herein.

### BACKGROUND

Recreational vehicles, such as motorcycles, or off-road vehicles, such as all-terrain vehicles (ATVs), utility vehicles (UVs), side-by-side vehicles, and snowmobiles, are widely used for recreational purposes. A variety of constraints (e.g., energy constraints, hardware constraints, and/or manufacturing constraints) may affect the resources with which processing may be performed by such vehicles. Further, these vehicles may be used in areas having varying availability of connectivity technologies with which to communicate.

It is with respect to these and other general considerations that embodiments have been described. Also, although relatively specific problems have been discussed, it should be understood that the embodiments should not be limited to solving the specific problems identified in the background.

### SUMMARY

Examples provided herein relate to vehicle processing and connectivity (e.g., for a recreational vehicle). Exemplary embodiments include but are not limited to the following examples.

In one aspect, control unit for a vehicle is provided. The control unit comprises: a processing system comprising: an application domain and a real-time domain. The real-time domain comprises: a general-purpose core; and a special-purpose core; and domain control logic that, when executed by the processing system, performs a set of operations. The set of operations performed by the domain control logic comprises: determining, based on a context for the vehicle, to perform a general-purpose computing task using the special-purpose core; configuring the special-purpose core to perform general-purpose processing, thereby causing the special-purpose core to process the general-purpose computing task; and receiving, from the special-purpose core, a general-purpose processing result.

In another aspect, a method for controlling a connectivity system of a vehicle is provided. The method comprises: evaluating a set of connectivity conditions associated with the vehicle; determining, based on the set of connectivity conditions, an operating mode for the connectivity system to communicate via a cellular network, wherein the connectivity system comprises a digital signal processor (DSP) having: a first operating mode associated with a first cellular network standard; and a second operating mode associated with a second cellular network standard; configuring the DSP of the connectivity system according to the determined operating mode; and communicating via a cellular network using the DSP.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS

Non-limiting and non-exhaustive examples are described with reference to the following Figures.
FIG. 1 illustrates a representative view of example components of a recreational vehicle, processing and connectivity functionality of which may be used to communicate with a vehicle platform and a remote computing device according to aspects of the present disclosure.
FIG. 2 illustrates an example control unit of a vehicle for processing and vehicle connectivity functionality according to aspects described herein.
FIG. 3 illustrates an overview of an example process flow for controlling processing functionality of a vehicle according to aspects of the present disclosure.
FIG. 4 illustrates an overview of an example method for controlling processing functionality of a vehicle according to aspects described herein.
FIG. 5 illustrates an overview of an example method for controlling connectivity functionality of a vehicle according to aspects of the present disclosure.
FIG. 6 illustrates a diagram of a computing system 600 for implementing aspects of vehicle processing and connectivity functionality according to aspects described herein.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Embodiments may be practiced as methods, systems or devices. The following detailed description is therefore not to be taken in a limiting sense, and the scope of the present disclosure is defined by the appended claims and their equivalents.

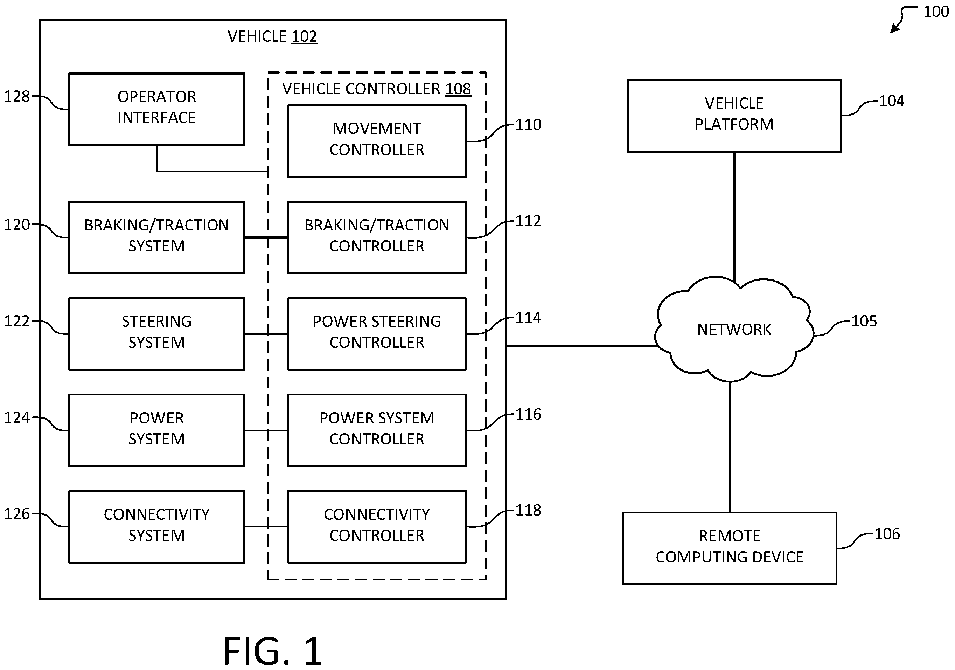

FIG. 1 illustrates a representative view of example components of recreational vehicle 102, processing and connectivity functionality of which may be used to communicate with vehicle platform 104 and remote computing device 106 according to aspects of the present disclosure. Vehicle 102 is illustrated as comprising operator interface 128, which includes at least one input device and at least one output device. Example input devices include levers, buttons, switches, soft keys, and other suitable input devices. Example output devices include lights, displays, audio devices, tactile devices, and other suitable output devices. Vehicle controller 108 may provide information for display via operator interface 128 and/or receive user input from operator interface 128 that may affect operation of vehicle 102 and/or information presented via operator interface 128, among other examples.

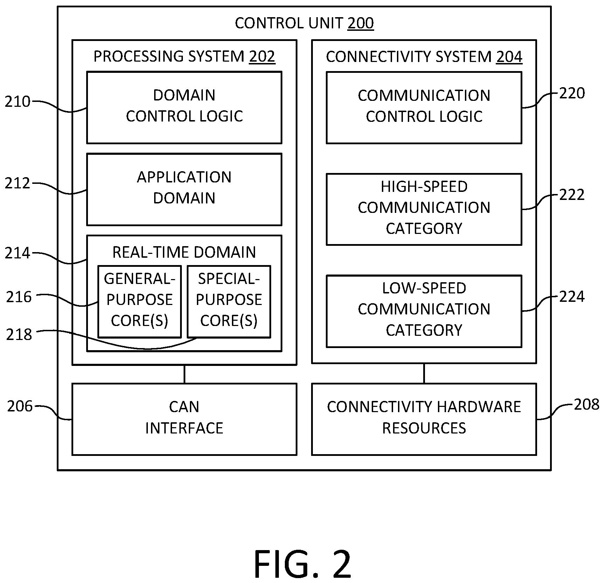

As illustrated, vehicle controller 108 is represented as including several controllers. These controllers may each be single devices or distributed devices or one or more of these controllers may together be part of a single device or distributed device. For example, the functionality described herein with respect to vehicle controller 108 may be implemented by one or more control units, an example of which is provided below with respect to control unit 200 in FIG. 2. The functions of these controllers may be performed by hardware and/or as computer instructions on a non-transient computer readable storage medium.

As an example, vehicle controller 108 may include at least two separate control units that communicate over a network. In one embodiment, the network is a controller area network (CAN) bus. In one embodiment, the CAN is implemented in accord with the J1939 protocol. Details regarding an exemplary CAN are disclosed in US Patent Application Serial No. 11/218,163, filed September 1, 2005, the disclosure of which is expressly incorporated by reference herein. It will be appreciated that any of a variety of additional or alternative communication technologies and/or associated protocols may be used in addition to, or as an alternative to, a CAN bus. For example, an Ethernet or BroadR-Reach connection, a fiber connection, a universal serial bus (USB) connection, a two-wire serial connection, and/or a wireless connection may be used in other examples.

Movement controller 110 may perform a variety of processing to control operation of vehicle 102. As an example, movement controller 110 may control the pressure and frequency of the actuation of one or more brake calipers of braking/traction system 120, a steering angle of one or more ground-engaging members of steering system 122, and/or a power output of one or more engines, electric motors, and/or other powertrain components of power system 124. In examples, movement controller 110 may receive user input via external controls (e.g., of operator interface 128) or remotely via connectivity system 126 (e.g., from vehicle platform 104 or remote computing device 106) and control operation of vehicle 102 accordingly. In other examples, vehicle controller 108 may be an autonomous-ready system that automatically affects operation of vehicle 102 in response to detected conditions of the vehicle and/or the environment in which the vehicle is operating.

Vehicle controller 108 further includes a braking/traction controller 112, which controls the operation of braking/traction system 120. In one example, braking/traction controller 112 controls braking/traction system 120 of vehicle 102, such as the pressure and frequency of the actuation of one or more brake calipers of vehicle 102. As another example, braking/traction controller 112 may monitor a plurality of sensors, such as a vehicle speed sensor that monitors track speed and/or an engine RPM sensor. In one embodiment, braking/traction system 120 includes anti-lock brakes. In one embodiment, braking/traction system 120 includes active descent control and/or engine braking. In one embodiment, braking/traction system 120 includes a brake and in some embodiments a separate parking brake.

Vehicle controller 108 further includes a power steering controller 114, which controls the operation of steering system 122. In one example, power steering controller 114 controls an amount of assist provided by a power steering unit of vehicle 102. For example, power steering controller 114 may receive user input via operator interface 128 and control steering system 122 accordingly. Further, power steering controller 114 monitors a plurality of sensors. Example sensors are provided in U.S. Patent Application Serial No. 12/135,107, assigned to the assignee of the present application, titled VEHICLE, docket PLR-06-22542.02P, the disclosure of which is expressly incorporated by reference herein.

Vehicle controller 108 further includes a power system controller 116, which controls the operation of power system 124. For example, power system 124 may comprise at least one of a power source (e.g., an internal combustion engine and/or an electric motor), a transmission, and one or more differentials. For example, power system controller 116 may receive user input via operator interface 128 and control power system 124 accordingly. Further, power system controller 116 may monitor a plurality of sensors, including, but not limited to, a temperature sensor, a throttle position sensor (TPS), an exhaust gas temperature sensor (EGT), a crank position sensor (CPS), a detonation sensor (DET), an airbox pressure sensor, an intake air temperature sensor, and any of a variety of additional or alternative parameters used to control engine performance.

Vehicle controller 108 further includes a connectivity controller 118, which controls communication between vehicle 102 and other devices (e.g., vehicle platform 104 and remote computing device 106) via network 105. For example, network 105 may comprise a local area network, a peer-to-peer network, the Internet, or any of a variety of other networks.

In one embodiment, connectivity controller 118 communicates with paired devices via network 105. An example wireless network includes a radio frequency network utilizing a BLUETOOTH protocol. In this example, connectivity system 126 may include a radio frequency antenna. Connectivity controller 118 may control the pairing of devices to vehicle 102 and communication between vehicle 102 and such remote devices.

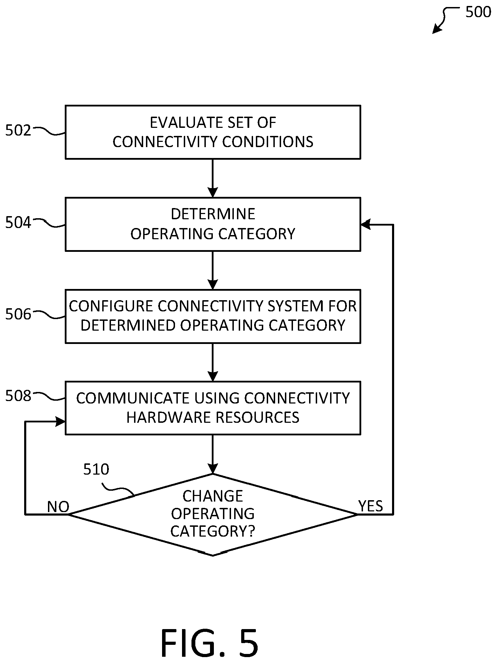

As another example, connectivity system 126 further includes cellular connectivity hardware according to aspects described herein, such that network 105 includes a cellular network via which connectivity controller 118 may communicate accordingly. For example, connectivity controller 118 may manage cellular connectivity hardware of connectivity system 126 to control a data rate, category, and/or associated standard with which connectivity system 126 communicates. Examples include, but are not limited to, RedCap defined by the 5G standard, Category M or M2 as defined by the Long-Term Evolution (LTE) standard, Narrowband Internet of Things (NB-IoT), LTE Category 1, and/or LTE Category 4. Additional examples of such aspects are described below with respect to FIGS. 2 and 5.

Further, it will be appreciated that any of a variety of network technologies may be used and that, while one example network 105 is illustrated, any number of networks and associated technologies may be used. For example, connectivity system 126 may additionally, or alternatively, include a satellite antenna and/or one or more components for wired communication, among other examples. For instance, connectivity system 126 may further include a long-range radio (e.g., for LoRa or LoRaWAN communication), among other examples. As such, connectivity system 126 may be usable to communicate via a cellular network, as noted above, and may alternatively or additionally provide vehicle-to-vehicle (V2V) communication via the long-range radio (e.g., when cellular communication is not available). Additional examples of such V2V communication techniques are provided in U.S. Patent No. 10,764,729, assigned to the assignee of the present application, titled COMMUNICATION SYSTEM USING VEHICLE TO VEHICLE RADIO AS AN ALTERNATE COMMUNICATION MEANS, and in U.S. Patent No. 11,412,359, assigned to the assignee of the present application, titled VEHICLE-TO-VEHICLE COMMUNICATION SYSTEM, the entire disclosures of which are expressly incorporated by reference herein.

While example processing has been described above with respect to vehicle controller 108 (and constituent controllers 110, 112, 114, 116, and 118), it will be appreciated that any of a variety of additional or alternative processing may be performed in other examples.

For instance, a variety of telemetry data may be generated during operation of vehicle 102, which may be processed by vehicle controller 108. As an example, telemetry data may be aggregated or otherwise obtained from a variety of vehicle systems (e.g., systems 120-126) and/or associated controllers (e.g., controllers 112-118), which may then be provided to vehicle platform 104. In some examples, vehicle controller 108 processes the telemetry data prior to providing the data to vehicle platform 104 (e.g., to filter, summarize, and/or compress the telemetry data). As another example, vehicle controller 108 may process the telemetry data to identify the presence of one or more conditions (e.g., a current condition that needs operator attention, or a predicted or upcoming condition), such that an indication may be provided to an operator accordingly (e.g., via operator interface 128 and/or remote computing device 106).

As another example, vehicle controller 108 may perform processing associated with an in-vehicle infotainment (IVI) system (e.g., of operator interface 128), such as audio and/or video encoding/decoding, as well as digital-to-analog conversion, among other examples. In a further example, vehicle controller 108 may perform processing associated with any of a variety of machine learning operations, such as image processing and/or object recognition/detection (e.g., for autonomous or semi-autonomous operation of vehicle 102). Processing performed by vehicle controller 108 may also facilitate or otherwise enable any of a variety of cloud-based functionality, including, but not limited to, over-the-air updates (e.g., as may be obtained from vehicle platform 104), vehicle location tracking (e.g., as may be viewed via remote computing device 106), theft alerting (e.g., based on movement detection and/or geofencing), and/or vehicle health monitoring.

Additional examples of these and other such functionalities are discussed by U.S. Patent Application No. 17/506,249, filed October 20, 2021, titled VEHICLE COMMUNICATION AND MONITORING, docket PLR-886-29463.03P-US, the entire disclosure of which is hereby expressly incorporated by reference herein. For instance, processing performed by vehicle controller 108 may be configured based on the state of the vehicle (e.g., whether the vehicle is off, idle, or on, or depending on the state of charge of the vehicle's battery) and/or in response to a remote indication (e.g., as may be received via connectivity system 126) and/or, among other examples. Additional examples are discussed in greater detail below.

FIG. 2 illustrates an example control unit 200 of a vehicle (e.g., vehicle 102 in FIG. 1) for processing and vehicle connectivity functionality according to aspects described herein. For example, aspects of control unit 200 may be used to provide functionality discussed above with respect to vehicle controller 108 and/or operator interface 128 in FIG. 1.

As illustrated, control unit 200 includes processing system 202, connectivity system 204, CAN interface 206, and connectivity hardware resources 208. Aspects of processing system 202 may be similar to those discussed above with respect to vehicle controller 108 and are therefore not redescribed in detail below. Similarly, aspects described herein with respect to connectivity system 204 and connectivity hardware resources 208 may form at least a part of connectivity system 126 and/or connectivity controller 118 discussed above with respect to FIG. 1. In examples, aspects of processing system 202, connectivity system 204, CAN interface 206, and/or connectivity hardware resources 208 may form at least a part of a system on a chip (SoC), which may be used for a vehicle controller (e.g., vehicle controller 108).

Processing system 202 includes domain control logic 210, application domain 212, and real-time domain 214, which itself includes general-purpose core(s) 216 and special-purpose core(s) 218. Application domain 212 may similarly have one or more associated processing cores (not pictured). For example, application domain 212 may have an associated set of general-purpose cores on which a Linux-based operating system executes, while a real-time operating system may be executed by general-purpose core(s) 216 of real-time domain 214 and processing associated with digital signal processing (DSP), CAN communication (e.g., via CAN interface 206), graphics, artificial intelligence (AI) or machine learning (ML), among other examples, may be performed by special-purpose core(s) 218.

Thus, application domain 212 may be responsible for tasks that are comparatively less sensitive to processing delays and stability considerations (e.g., as may be associated with navigation and/or multimedia/IVI functionality), while real-time domain 214 may be responsible for functionality that is comparatively more sensitive to processing delays and stability considerations, as may be associated with the operation of a vehicle (e.g., controllers 110-118 of vehicle 102 in FIG. 1). In examples, real-time domain 214 may be able to transition quickly to a powered on state in response to a hardware interrupt (e.g., a real-time clock alarm) or any of a variety of other events.

As illustrated, processing system 202 is organized into multiple power domains (e.g., application domain 212 and real-time domain 214), which may be operated independently. For example, application domain 212 and real-time domain 214 may each have an associated set of power states and/or frequencies at which they may operate, such that application domain 212 may be powered off while real-time domain 214 is in standby or powered on. Similarly, application domain 212 may be operated at a lower power state (e.g., having a reduced clock speed and/or number of enabled cores), while real-time domain 214 may operate at a higher power state (e.g., at its maximum clock speed and/or using all of its available cores). While example power domains are illustrated, it will be appreciated that, in other examples, any of a variety of additional or alternative domains (and associated divisions of cores therein) may be used. For instance, at least some of special-purpose core(s) 218 may be placed in a different power domain than general-purpose core(s) 216 in other examples.

While special-purpose core(s) 218 may be biased toward special-purpose processing (e.g., DSP for wireless protocols such as Bluetooth Low Energy (BLE) and/or cellular protocols, AI/ML, processing, CAN communication, and/or graphics processing), at least some of the cores may be capable of more balanced processing (e.g., between both special-purpose processing and general-purpose processing). For instance, a special-purpose core may be capable of performing both DSP processing and real-time general processing. As a result, such a special-purpose core may be enlisted to perform general-purpose processing according to aspects described herein (e.g., as may otherwise be performed by general-purpose core(s) 216), which may thus reduce the transistor count of the SoC (e.g., as a result of including fewer general-purpose-only cores), decrease associated power consumption, increase the amount of available resources for general-purpose processing, and/or increase the speed with which processing is completed, among other examples. Further, such aspects may reduce instances where special-purpose core(s) 218 would otherwise be unused.

As an example, firmware for a special-purpose core may enable the core to perform both special-purpose processing and general-purpose processing by defining respective operating modes associated with each type of processing. The firmware may be programmable, such that it may be changed depending on a context in which control unit 200 is to be used and/or such that it may be updated (e.g., by a vehicle platform, such as vehicle platform 104 in FIG. 1). The firmware may include decision logic that enables the special-purpose core to switch between special-purpose processing and general-purpose processing. In examples, such a determination may be made by the core itself or a special-purpose core may switch in response to an indication received by the core (e.g., from software executed by general-purpose core(s) 216 and/or application domain 212).

Processing system 202 is illustrated as comprising domain control logic 210, which, in some examples, may be executed by or may otherwise be part of application domain 212 and/or real-time domain 214, among other examples. Domain control logic 210 may manage processing performed by special-purpose core(s) 218 of real-time domain 214. For example, domain control logic 210 may configure one or more cores of special-purpose core(s) 218 to perform special-purpose processing or general-purpose processing.

Domain control logic 210 may manage special-purpose core(s) 218 according to any of a variety of criteria and/or in response to any of a variety of events. For example, domain control logic 210 may receive an indication from an application executing or other software in application domain 212 to enlist computing resources to perform a general-purpose computing task. In examples, the general-purpose computing task is already executing (e.g., on one or more cores of application domain 212 and/or real-time domain 214). Domain control logic 210 may determine whether one or more special-purpose core(s) 218 are available for general-purpose processing. For example, a special-purpose core may be determined to be available if it is unused, if processing performed by the core could be deferred, and/or if processing performed by the core could be performed by another special-purpose core, among other examples.

As another example, domain control logic 210 processes a remote indication (e.g., as may have been received via connectivity system 204) to determine which resources to enlist when performing processing specified by or otherwise associated with the remote indication. It will be appreciated that the remote indication may be pushed to control unit 200 or may be retrieved by control unit 200, among other examples. In some instances, the remote indication specifies how the processing should be performed (e.g., a set of criteria and/or which domain(s) should be used), which may be processed by domain control logic 210 accordingly. Thus, domain control logic 210 may determine whether to perform processing in application domain 212 and/or real-time domain 214 when processing the remote indication, such that processing system 202 is configured accordingly.

As a further example, domain control logic 210 may determine to perform processing in application domain 212 until a predetermined amount of time has elapsed and/or until a battery of the vehicle reaches a threshold, among other criteria. Once such criteria are met, domain control logic 210 may suspend processing or may transition processing from application domain 212 to real-time domain 214 accordingly, among other examples.

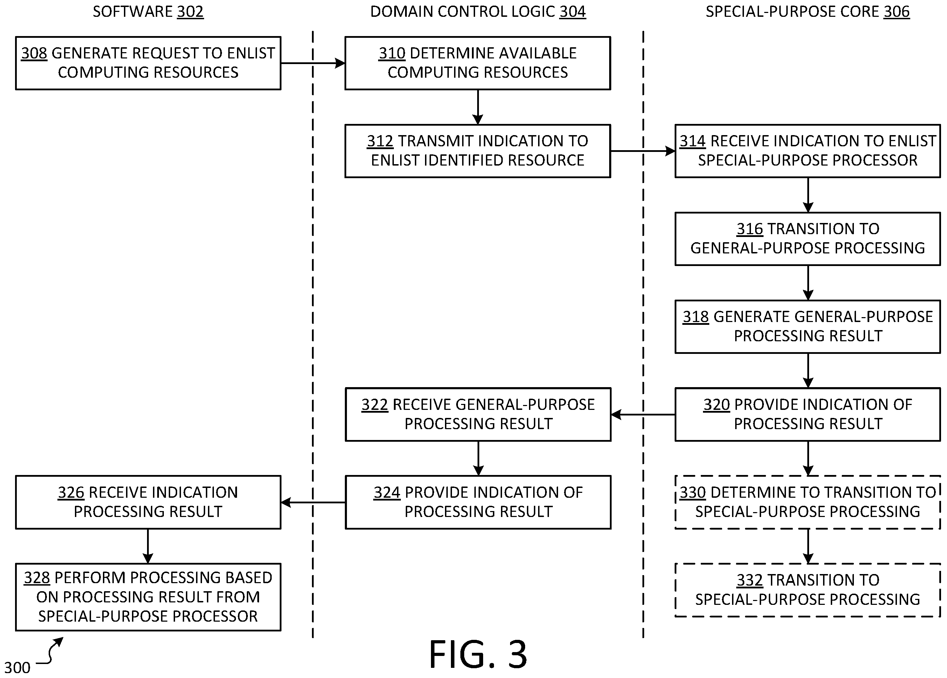

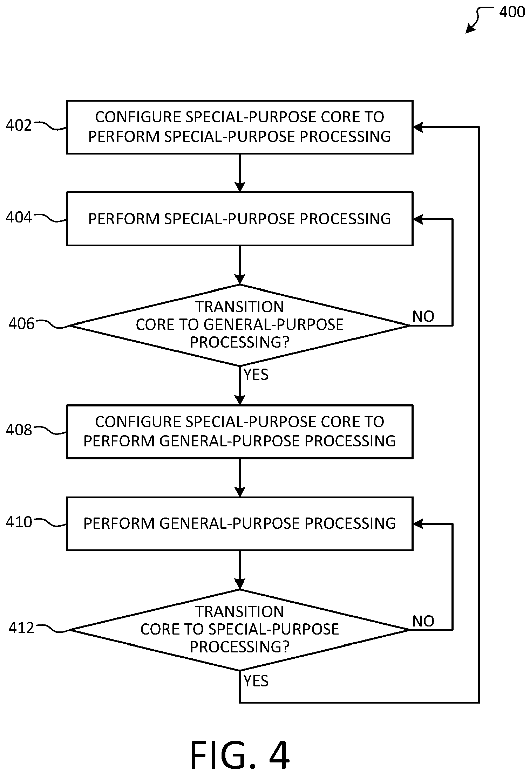

If one or more available special-purpose cores are identified, domain control logic 210 may provide an indication of the general-purpose workload to the identified core(s), thereby causing the special-purpose core(s) to perform general-purpose processing accordingly. For instance, the special-purpose core(s) may process the general-purpose computing task in conjunction with general-purpose core(s) 216, one or more cores of application domain 212 (not pictured), and/or any of a variety of processing cores (e.g., of a graphics processing unit), among other examples. In examples, an indication of a processing result is provided (e.g., to the application from which the indication was received) once the special-purpose core(s) have completed the general-purpose processing. Additional examples of such aspects are described below with respect to FIGS. 3 and 4.

As another example, domain control logic 210 may determine to enlist one or more cores of special-purpose core(s) 218 for general-purpose processing depending on a context of the vehicle. For example, if the vehicle is powered on, a special-purpose core may be used for audio/signal tuning and/or digital-to-analog conversion. By contrast, when the vehicle is powered off (or an associated IVI is not in use), domain control logic 210 may determine to transition the special-purpose core to general-purpose processing. Thus, special-purpose core(s) 218 may subsume or otherwise assist with various processing performed by general-purpose core(s) 216, thereby enabling special-purpose core(s) 218 to be used as an alternative to or in addition to general-purpose core(s) 216.

Similarly, a special-purpose core may be used for general-purpose processing of real-time domain 214 until it is determined that computing resources are needed for video and/or AI/ML, processing of a backup camera feed as a result of a vehicle transitioning from park or drive to reverse. As a result of such a determination, a general-purpose computing task may be reassigned or deferred, such that the special-purpose core may transition to such special-purpose processing accordingly.

As a further example, special-purpose core(s) 218 may be enlisted to process sensor data and/or other telemetry data at comparatively lower power than may be possible within application domain 212, prior to transmission to a vehicle platform (e.g., vehicle platform 104 in FIG. 1). Thus, edge processing may be performed at the vehicle at reduced power and/or in a reduced amount of time than if application domain 212 or only general-purpose core(s) 216 were used.

While control unit 200 is illustrated as including only CAN interface 206, it will be appreciated that any of a variety of additional or alternative communication interfaces may be used by processing system 202 in other examples. Other such interfaces include, but are not limited to, Inter-Integrated Circuit (I²C), Serial Peripheral Interface (SPI), Mobile Industry Processor Interface (MIPI) Camera Serial Interface (CSI), MIPI Display Serial Interface (DSI), USB, and/or Peripheral Component Interconnect Express (PCIe), among other examples.

Control unit 200 is further illustrated as comprising connectivity system 204 and connectivity hardware resources 208. Examples of connectivity hardware resources 208 include, but are not limited to, one or more antennas and a subscriber identity module (e.g., a SIM receptacle and SIM card, an electronic SIM (eSIM), or an integrated SIM (iSIM)). As illustrated, connectivity system 204 includes communication control logic 220, high-speed communication category 222 and low-speed communication category 224. In examples, connectivity system 204 includes a software-defined radio (SDR) having a DSP that supports a set of data rates and/or modulation capabilities for higher specification cellular standard (e.g., high-speed communication category 222), such that the DSP may be configured (e.g., by communication control logic 220) to further support a different set of data rates and/or modulation capabilities for a lower specification cellular standard (e.g., low-speed communication category 224).

For example, high-speed communication category 222 may be Category 1, while low-speed communication category 224 may be Category M. As another example, high-speed communication category 222 may be Category 4, while low-speed communication category 224 may be NB-IoT. In a further example, high-speed communication category 222 may be a baseline 5G connection, while low-speed communication category 224 may be 5G RedCap. However, increased data throughput offered by higher categories (e.g., Category 1, Category 4, or baseline 5G) may have an associated decrease in range as compared to lower categories (e.g., Category M, NB-IoT, or RedCap). Thus, as a result of supporting the requirements associated with high-speed communication category 222, connectivity system 204 may be configured to support a standard having comparatively lower or less technologically demanding specifications to achieve a potential increase in communication range.

While example high-speed/low-speed communication technology pairings are described, it will be appreciated that any number and/or set of communication technologies may be used in other examples. For instance, connectivity system 204 may use 5G when available (e.g., using baseline 5G as high-speed communication category 222 and RedCap as low-speed communication category 224), and may fall back to LTE as applicable (e.g., instead using Category 1 or 4 as high-speed communication category 222 and Category M or NB-IoT as low-speed communication category 224).

As a result, connectivity system 204 may transition from a higher-throughput but lower-range category to a lower-throughput but higher-range category, and vice versa, according to an associated context. Such aspects may be beneficial in instances where a vehicle transitions between urban/suburban areas having relatively strong cellular coverage and remote areas having comparatively reduced cellular coverage, among other examples. While connectivity system 204 is illustrated as including two communication categories 222, 224, it will be appreciated that additional or alternative categories may be included in other examples.

Thus, connectivity system 204 includes firmware configured to operate connectivity system 204 (e.g., an SDR and/or a DSP associated therewith) according to both high-speed communication category 222 and low-speed communication category 224. For instance, the firmware may configure aspects of connectivity system 204 to generate a digital signal according to an associated bitrate and/or modulation scheme associated with the specific cellular protocol. The resulting digital signal (e.g., associated with category 222 or category 224) may thus be transmitted via connectivity hardware resources 208. Additionally, or alternatively, a clock speed may be increased/decreased and/or a hardware block may be enabled and/or disabled depending on the communication category for which connectivity system 204 is configured.

Communication control logic 220 may switch the operating mode of connectivity system 204 according to any of a variety of connectivity conditions, including, but not limited to, an estimated or determined amount of data to be sent and/or received, an estimated duration for which the vehicle will be operated, signal strength, available throughput, network latency, network congestion, time of day, whether a vehicle is powered on and/or a state of charge of a power source of the vehicle, and/or geographic location and associated cellular network information (e.g., as may be obtained from a vehicle platform, such as vehicle platform 104 in FIG. 1).

In addition to or as an alternative to controlling connectivity system 204 based on local connectivity conditions, communication control logic 220 may process a remote indication corresponding to connectivity conditions for a population of devices. For example, connectivity information may be aggregated from a population of devices (e.g., by vehicle platform 104 or other service), which may thus be processed by the service to determine if there is an issue that is affecting a larger group of devices (e.g., rather than just an individual device or a number of devices below a threshold or density). For example, latency, signal strength, and/or bandwidth, among other examples, may be processed based on a set of thresholds and/or based on historical network performance, among other examples, to determine whether an issue is present. As an example, the service may group devices according to geographic proximity, cellular carrier, and/or device type, among other factors, such that a group of devices is evaluated to determine whether the group of devices is experiencing an issue. If the service identifies an issue, an indication may be provided by the service to affected devices (e.g., a device including connectivity system 204), such that communication control logic 220 may reconfigure connectivity system 204 accordingly.

For example, affected devices may be instructed to transition from high-speed communication category 222 to low-speed communication category 224, or vice versa, among other examples. In such an example, the service may have connectivity condition information for devices using varying communication categories and/or technologies (e.g., as may be provided by the population of devices and/or as may be determined based on other communications with the devices), such that the service may compare the performance (e.g., latency, signal strength, bandwidth) of such categories/technologies to make a determination accordingly.

As another example, the service may aggregate connectivity condition information and may provide aggregated condition information to devices with a given geographic region, thereby enabling individual devices to make determinations based on the aggregated condition information. Thus, the configuration of connectivity system 204 may be controlled by communication control logic based on local connectivity conditions, a received indication from a service based on aggregated condition information, and/or based on aggregated condition information from such a service, among other examples.

For example, communication control logic 220 may default to high-speed communication category 222 when a comparatively high-speed cellular network connection (e.g., high-speed communication category 222) is available. Communication control logic 220 may then fallback to low-speed communication category 224 in instances of low signal quality and/or low throughput, as may be the case for use cases that are comparatively remote and/or data-limited.

As noted above, communication control logic 220 may select a cellular category based on a geographic location (e.g., as may be determined by a location determiner, not pictured). Control unit 200 may store cellular zone band data and/or other cellular network information in association with map data, which may be evaluated based on the geographic location to determine the availability of cellular connectivity. In such an example, communication control logic 220 may determine to fallback to low-speed communication category 224 based on the geographic location (e.g., without first attempting connectivity via high-speed communication category 222).

As a result of the flexibility provided by the SDR of connectivity system 204, multiple cellular protocols may be supported without the use of multiple modems and/or SIMs, thereby simplifying the design of control unit 200, reducing associated energy consumption and the cost of manufacturing, and potentially reducing the overhead associated with transitioning between different cellular protocols (e.g., without necessarily de-initializing a first modem to initialize a second modem with a cellular network).

While control unit 200 is illustrated as a single control unit, it will be appreciated that, in other examples, aspects of control unit 200 may be distributed among any number of control units. For example, similar aspects may be implemented by an operator interface and a telematics control unit, which may communicate via an extensibility interface. As another example, multiple instances of connectivity hardware may be used in examples where technological differences limit reusability across various protocols, categories, and/or technologies. For example, multiple modems may be used or, as another example, a cellular modem may be used in conjunction with a long-range radio to enable communication fallback to V2V communication, among other examples. Additional examples of such aspects are described by at least FIGS. 43, 44, 45A, 45B, 46A, and 46B, and the associated description of U.S. Application No. 17/506,249, which, as noted above, is expressly incorporated by reference in its entirety.

FIG. 3 illustrates an overview of an example process flow 300 for controlling processing functionality of a vehicle according to aspects of the present disclosure. As illustrated, process flow 300 occurs between software 302, domain control logic 304, and special-purpose core 306. Aspects of domain control logic 304 and special-purpose core 306 may be similar to domain control logic 210 and special-purpose core(s) 218, respectively, in FIG. 2 and are therefore not redescribed in detail below. Software 302 may be executing in an application domain (e.g., application domain 212) or a real-time domain (e.g., real-time domain 214), among other examples.

As illustrated, flow 300 begins at operation 308, where a request is generated to enlist computing resources. In examples, the request is to enlist computing resources for a general-purpose computing task. The request may be generated as a result of software 302 generating a call to an application programming interface (API), as may be provided by an operating system and/or an associated scheduler. As another example, the request may result from a remote indication to perform processing by the vehicle, as discussed above.

At operation 310, domain control logic 304 determines an available set of computing resources. For instance, domain control logic 304 may evaluate, among other things, the availability of one or more special-purpose cores (e.g., special-purpose core(s) 218 in FIG. 2). The evaluation may comprise evaluating the utilization of a special-purpose core, whether processing may be shifted from one special-purpose core to another special-purpose core, and/or whether processing performed by the special-purpose core may be deferred, among other examples. In some instances, operation 310 comprises evaluating a context associated with the request that was received from software 302, as may be associated with a vehicle (e.g., vehicle 102). Examples include, but are not limited to, evaluating whether the vehicle is powered on, idling, in reverse, or operating under autonomous or semi-autonomous control. In such contexts, the special-purpose core may be performing special-purpose processing to support these and other vehicle functionalities and may thus be determined to be unavailable to perform general-purpose processing.

Flow progresses to operation 312, where an indication is transmitted to an identified computing resource (e.g., one or more special-purpose cores) to enlist the resource in processing for software 302. The indication may correspond to functionality of firmware for special-purpose core 306, where the firmware enables special-purpose core 306 to selectively perform both special-purpose processing and general-purpose processing according to aspects described herein. In examples, operation 312 further comprises providing an indication of the general-purpose computing task to be performed by special-purpose core 306. While flow 300 is illustrated with respect to a single special-purpose core 306, it will be appreciated that any number of special-purpose cores may be used in other examples.

At operation 314, the indication is received by special-purpose core 306, such that special-purpose core 306 transitions to general-purpose processing at operation 316 in response. In examples, transitioning to general-purpose processing comprises saving a state associated with special-purpose processing that was being performed by special-purpose core 306 and/or providing an indication of such processing to another special-purpose core (as may be the case when a different special-purpose core will perform processing on behalf of special-purpose core 306).

While flow 300 is illustrated in an example where special-purpose core 306 is already performing special-purpose processing, it will be appreciated that similar techniques may be used in instances where special-purpose core 306 is unused, idle, or powered off, among other examples.

A general-purpose processing result for the general-purpose computing task of software 302 is generated at operation 318, an indication of which is provided to domain control logic 304 at operation 320. Accordingly, domain control logic 304 receives the indication of the general-purpose processing result at operation 322, which is then provided to software 302 at operation 324. In some instances, the general-purpose processing result may instead be provided directly to software 302, rather than via domain control logic 304 as illustrated in the instant example.

At operation 326, software 302 receives the indication of the general-purpose processing result, such that, at operation 328, software 302 may perform subsequent processing based on the general-purpose processing result that was generated at least in part by special-purpose core 306. For example, additional computing resources (e.g., general-purpose and/or special-purpose cores) may have been enlisted at operations 310 and 312 in some examples, such that processing results from the enlisted computing resources may be merged or otherwise aggregated (e.g., by domain control logic 304) and obtained by software 302 at operation 326.

Flow 300 is illustrated as further including operations 330 and 332, where special-purpose core 306 determines to transition and ultimately transitions to special-purpose processing, respectively. For example, special-purpose core 306 may automatically resume special-purpose processing once general-purpose processing concludes. As another example, an indication to transition to special-purpose processing may be received from domain control logic 304.

Accordingly, operation 332 may comprise accessing state information associated with earlier special-purpose processing that was performed by special-purpose core 306 (e.g., as may have been generated at operation 316) or resuming processing that was temporarily subsumed by another special-purpose core, among other examples. Operations 330 and 332 are illustrated using dashed boxes to indicate that, in some examples, they may be omitted. For example, special-purpose core 306 may instead be placed in an idle state or may be powered off once general-purpose processing concludes, among other examples. Flow 300 terminates at operation 328 and, in some examples, operation 332.

FIG. 4 illustrates an overview of an example method 400 for controlling processing functionality of a vehicle according to aspects described herein. In examples, domain control logic (e.g., domain control logic 210 or 304 in FIGS. 2 and 3, respectively) comprises aspects of method 400. For instance, aspects of method 400 may be performed by a scheduler of an operating system, as may execute in an application domain (e.g., application domain 212) or a real-time domain (e.g., real-time domain 214), among other examples.

Method 400 begins at operation 402, where a special-purpose core is configured to perform special-purpose processing. In examples, operation 402 comprises providing a special-purpose processing indication to the special-purpose core, thereby causing firmware of the special-purpose core to configure the core accordingly. As a result of operation 402, the special-purpose core performs special-purpose processing at operation 404 accordingly. Examples of special-purpose processing include, but are not limited to, digital signal processing, AI/ML, processing, CAN communication processing, audio/video encoding/decoding, and/or graphics processing, among other examples.

At determination 406, it is determined whether to transition the special-purpose core to general-purpose processing. As noted above, the determination may be based at least in part on a context of a vehicle (e.g., vehicle 102 in FIG. 1) and/or processing that is being performed by the special-purpose core and/or other cores associated therewith (e.g., in the same power domain), among other examples. In other examples, determination 406 is performed based on a request to enlist computing resources for general-purpose processing (e.g., as was discussed above with respect to operation 310 in FIG. 3). As a further example, determination 406 may be performed when a special-purpose processing task has concluded and/or based on a remote indication, among other examples. It will therefore be appreciated that any of a variety of processing may be performed to determine whether to transition the special-purpose core to general-purpose processing.

If it is determined not to transition the special-purpose core, flow branches "NO" and returns to operation 404, such that the special-purpose core may continue to perform special-purpose processing. While method 400 is illustrated in an example where special-purpose processing continues, it will be appreciated that, in other examples, the special-purpose core may be placed into an idle state or powered off (as may be the case when special-purpose processing has concluded), among other examples.

If, however, it is instead determined to transition the special-purpose core to general-purpose processing, flow branches "YES" to operation 408, where the special-purpose core is configured to perform general-purpose processing, thereby causing the special-purpose core to perform general-purpose processing at operation 410. Aspects of operations 408 and 410 may be similar to those discussed above with respect to operations 316 and 318, respectively, in FIG. 3 and are therefore not redescribed in detail.

Flow progresses to determination 412, where it is determined whether to transition the special-purpose core back to special-purpose processing. Similar to determination 406, the determination may be based at least in part on a context of a vehicle (e.g., vehicle 102 in FIG. 1) and/or processing that is being performed by other cores associated with the special-purpose core (e.g., in the same power domain), among other examples. For instance, it may be determined that additional special-purpose processing is needed (e.g., for object detection/recognition, image processing, and/or CAN communication, among other examples discussed above with respect to FIG. 2), such that the special-purpose core may transition away from general-purpose processing. As a further example, determination 412 may be performed when a general-purpose processing task has concluded (e.g., as was being performed at operation 410). It will therefore be appreciated that any of a variety of processing may be performed to determine whether to transition the special-purpose core back to special-purpose processing.

If it is determined not to transition the special-purpose core, flow branches "NO" and returns to operation 410, such that the special-purpose core may continue to perform general-purpose processing. While method 400 is illustrated in an example where general-purpose processing continues, it will be appreciated that, in other examples, the special-purpose core may be placed into an idle state or may be powered off (as may be the case when general-purpose processing has concluded), among other examples.

If, however, it is instead determined to transition the special-purpose core back to special-purpose processing, flow branches "YES" and returns to operation 402, where the special-purpose core is configured to perform special-purpose processing, thereby causing the special-purpose core to resume special-purpose processing at operation 404.

While method 400 is described in an example where a single special-purpose core is managed, it will be appreciated that similar techniques may be used to manage any number of cores. Additionally, while method 400 is illustrated as beginning with a core performing special-purpose processing, it will be appreciated that, in other examples, method 400 may instead start at operation 408, where a special-purpose core is configured for general-purpose processing absent prior special-purpose processing. Similarly, method 400 need not loop, such that method 400 may instead terminate at operation 404 or operation 410 once special-purpose processing or general-purpose processing, respectively, has concluded.

FIG. 5 illustrates an overview of an example method 500 for controlling connectivity functionality of a vehicle according to aspects of the present disclosure. In examples, communication control logic (e.g., communication control logic 220 in FIG. 2) comprises aspects of method 500. Aspects of method 500 may be performed periodically (e.g., to respond to changing connectivity conditions) and/or in response to any of a variety of events (e.g., when a vehicle is powered on and/or powered off, when the amount of available CAN data exceeds a predetermined threshold, and/or when a user interacts with an IVI of the vehicle), among other examples.

As illustrated, method 500 begins at operation 502, where a set of connectivity conditions are evaluated. As noted above, example connectivity conditions include, but are not limited to, an estimated or determined amount of data to be sent and/or received, an estimated duration for which the vehicle will be operated, signal strength, available throughput, network latency, network congestion, time of day, whether a vehicle is powered on and/or a state of charge of a power source of the vehicle, and/or geographic location and associated cellular network information. In examples, the set of connectivity conditions includes local connectivity conditions and/or remote connectivity conditions, as discussed above. For example, remote connectivity conditions are obtained from a service that aggregates connectivity conditions from a set of devices and provides aggregated condition information for a group of devices accordingly. As another example, operation 502 comprises receiving an indication from such a service for a condition with which to communicate, as may be the case when the connectivity condition evaluation is performed remotely.

Method 500 progresses to operation 504, where an operating category is determined based on the evaluation performed at operation 502. As an example, a set of available categories may include high-speed communication category 222 and low-speed communication category 224 in FIG. 2. For instance, if it is determined that high-speed cellular communication is likely not available based on the geographic location of the vehicle or that a current cellular connection is experiencing congestion, poor signal quality, and/or high latency, a lower category (e.g., 5G RedCap, Category N, or NB-IoT) may be determined at operation 504. By contrast, if a geographic location of the vehicle indicates that high-speed cellular communication is likely available or the time of day indicates that a high-speed connection would be unlikely to exhibit congestion, a higher category (e.g., baseline 5G, Category 1, or Category 4) may be determined.

Such aspects are provided as an example and, in other examples, the set of connectivity conditions may be evaluated according to a set of rules (which may be hierarchical) or according to any of a variety of additional or alternative techniques to determine which category to use out of a set of available categories. Further, the available categories need not be limited to two categories and, in other examples, additional or alternative categories may be used. Further, it will be appreciated that similar techniques may be used to change between communication technologies, for example to select between cellular communication and V2V communication depending on the availability of cellular connectivity.

At operation 506, a connectivity system (e.g., connectivity system 204 in FIG. 2) is configured for the operating category that was determined at operation 504. In examples, configuring the connectivity system comprises configuring a DSP of the connectivity system to operate according to a determined category or protocol, thereby causing the DSP to generate a digital signal according to an associated bitrate and/or modulation scheme for the specific cellular protocol.

In examples where it is determined to transition from one communication technology to another communication technology, operation 506 comprises enabling communication via the identified communication interface and disabling communication via the other communication interface. For instance, a connection may be established with another vehicle when it is determined to communicate via V2V, while a cellular modem may be powered down or placed in a stand-by state. As another example, a communication interface may be retained in a state that is usable (e.g., having a connection to another vehicle or to a cellular network), but a connection may instead be routed via the other communication interface. Transitioning using such routing techniques may facilitate quicker transitions between communication interfaces in some examples.

Flow progresses to operation 508, where communication occurs via the connectivity system as configured at operation 506 using connectivity hardware resources (e.g., connectivity hardware resources 208 in FIG. 2). For example, a DSP of the connectivity system may generate digital signal as described above, which may be modulated onto a radio frequency and transmitted via an antenna of the connectivity hardware resources. Similarly, a signal may be received via the antenna and processed using the DSP to generate a digital output accordingly.

Eventually, flow progresses to determination 510, where it is determined to change the category with which the connectivity system is operating. Aspects of determination 510 may be similar to operation 502, such that a set of connectivity conditions may be evaluated to determine whether the operating category is to be changed. In examples, a set of rules is used and/or one or more connectivity conditions may be evaluated based on associated predetermined thresholds, among other examples. As an example, it may be determined that a signal strength is below a predetermined threshold, such that the connectivity system should transition from a high-speed category to a low-speed category. Conversely, it may be determined that a signal strength is above another predetermined threshold, such that the connectivity system should transition from the low-speed category to the high-speed category. As another example, a remote indication may be received from a service that aggregates connectivity information from multiple devices or a manual indication may be received from an operator of a vehicle, such that the operator may request a specific operating category or may request that connectivity via a higher-speed category is retried, among other examples. It will thus be appreciated that any of a variety of processing may be performed to determine whether to change the operating category of the connectivity system.

If it is determined not to change the operating category, flow branches "NO" and returns to operation 508, such that communication may continue via the connectivity system as currently configured. By contrast, if it is instead determined to change the operating category, flow branches "YES" and returns to operation 504, where a different operating category is determined. The connectivity system may thus be reconfigured according to the different operating category at operation 506, such that communication may occur via the different operating category at operation 508. Thus, aspects of method 500 may omit de-initialization and re-initialization with a cellular network when changing categories (as may be performed when using two different/distinct modems).

While methods 400 and 500 are illustrated separately in FIGS. 4 and 5, it will be appreciated that, in some examples, the available communication category/technology may affect how a processing system (e.g., processing system 202 in FIG. 2) is configured and, conversely, the configuration of the processing system may affect which communication category/technology is used by a connectivity system (connectivity system 204).

For example, if it is determined that only a low-speed communication category is available, domain control logic (e.g., domain control logic 210 in FIG. 2) may configure processing to be performed at a comparatively lower power state. Similarly, if the connectivity system is operating at a high-speed communication category, the domain control logic may configure processing to be performed at a comparatively higher power state.

Conversely, if the processing system is operating at a higher power (or higher throughput) state, the connectivity system may be configured to operate using the high-speed communication category. Similarly, if the processing system is operating at a lower power (or lower throughput) state, the connectivity system may be configured to operate using the low-speed communication category. Thus, operation of the processing system and/or connectivity system may be interdependent in addition to or as an alternative to the above-discussed aspects for the control logic of each respective system.

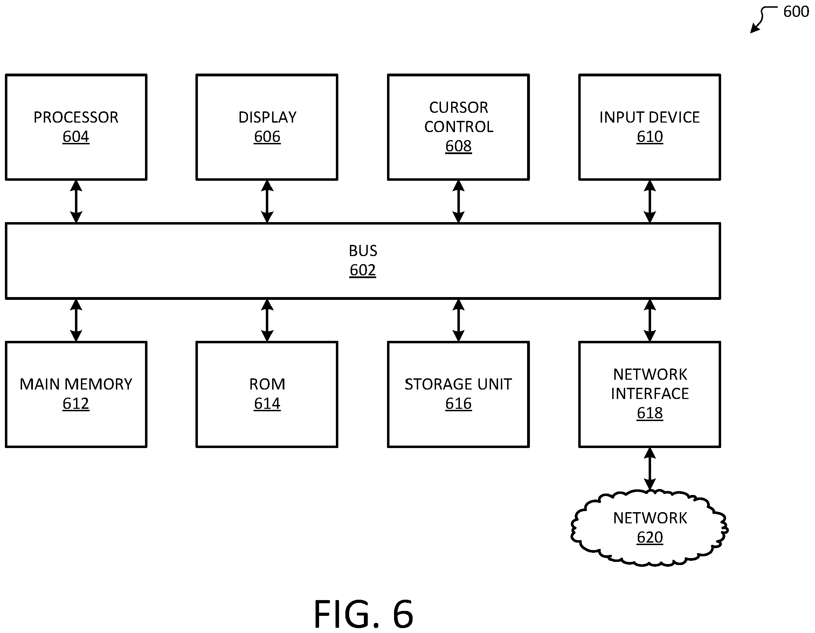

FIG. 6 illustrates a diagram of a computing system 600 for implementing aspects of vehicle processing and connectivity functionality according to aspects described herein. For example, some or all of the functions of vehicle platform 104, remote computing device 106, vehicle controller 108, and/or control unit 200 may be performed by a computing system that has similar components as the computing system 600. This diagram is merely an example, which should not unduly limit the scope of the claims. One of ordinary skill in the art would recognize many variations, alternatives, and modifications.

The computing system 600 includes a bus 602 or other communication mechanism for communicating information between, a processor 604, a display 606, a cursor control component 608, an input device 610, a main memory 612, a read only memory (ROM) 614, a storage unit 616, and/or a network interface 618. In some examples, the bus 602 is coupled to the processor 604, the display 606, the cursor control component 608, the input device 610, the main memory 612, the read only memory (ROM) 614, the storage unit 616, and/or the network interface 618. And, in certain examples, the network interface 618 is coupled to a network 620 (e.g., the network 105 in FIG. 1).

In some examples, the processor 604 includes one or more general-purpose and/or special-purpose microprocessors. In some examples, the main memory 612 (e.g., random access memory (RAM), cache and/or other dynamic storage devices) is configured to store information and instructions to be executed by the processor 604. In certain examples, the main memory 612 is configured to store temporary variables or other intermediate information during execution of instructions to be executed by processor 604. For example, the instructions, when stored in the storage unit 616 accessible to processor 604, render the computing system 600 into a special-purpose machine that is customized to perform the operations specified in the instructions (e.g., aspects discussed above with respect to FIGS. 1-5). In some examples, the ROM 614 is configured to store static information and instructions for the processor 604. In certain examples, the storage unit 616 (e.g., a magnetic disk, optical disk, or flash drive) is configured to store information and instructions.

Thus, computing system 600 may include at least some form of computer readable media. The computer readable media may be any available media that can be accessed by processor 604 or other devices. For example, the computer readable media may include computer storage media and communication media. The computer storage media may include volatile and nonvolatile, removable and non-removable media implemented in any method or technology for storage of information such as computer readable instructions, data structures, program modules or other data. The computer storage media may not include communication media.

In some embodiments, the display 606 (e.g., a cathode ray tube (CRT), an LCD display, or a touch screen) is configured to display information to a user of the computing system 600. In some examples, the input device 610 (e.g., alphanumeric and other keys) is configured to communicate information and commands to the processor 604. For example, the cursor control 608 (e.g., a mouse, a trackball, or cursor direction keys) is configured to communicate additional information and commands (e.g., to control cursor movements on the display 606) to the processor 604.

The following clauses are provided as examples of the disclosed subject matter:
1. A control unit for a vehicle, the control unit comprising: a processing system comprising: an application domain; and a real-time domain comprising: a general-purpose core; and a special-purpose core; and domain control logic that, when executed by the processing system, performs a set of operations comprising: determining, based on a context for the vehicle, to perform a general-purpose computing task using the special-purpose core; configuring the special-purpose core to perform general-purpose processing, thereby causing the special-purpose core to process the general-purpose computing task; and receiving, from the special-purpose core, a general-purpose processing result.
2. The control unit of clause 1, wherein the general-purpose core contemporaneously generates a second general-purpose processing result for the general-purpose computing task.
3. The control unit of any one of clauses 1-2, wherein the domain control logic is executed within the application domain.
4. The control unit of any one of clauses 1-3, wherein it is determined to use the special-purpose core in response to a request to enlist computing resources from software executing in the application domain.
5. The control unit of clause 4, wherein the request is received via an application programming interface associated with the domain control logic.
6. The control unit of any one of clauses 1-5, wherein the set of operations further comprises: configuring, in response to a change to the context for the vehicle, the special-purpose core to perform special-purpose processing.
7. The control unit of clause 6, wherein the special-purpose processing comprises one or more of: digital signal processing; machine learning processing; controller area network communication processing; audio/video encoding/decoding; or graphics processing.
8. The control unit of any one of clauses 1-7, further comprising firmware for the special-purpose core that defines: a first operating mode for special-purpose processing; and a second operating mode for general-purpose processing.
9. The control unit of any one of clauses 1-8, wherein the context for the vehicle comprises one or more of: whether the vehicle is powered on; whether the vehicle is idling; whether the vehicle is in reverse; whether the vehicle is operating under autonomous or semi-autonomous control; or whether an in-vehicle infotainment system is in-use.
10. The control unit of any one of clauses 1-9, wherein the processing system is at least a part of a system on a chip.
11. The control unit of any one of clauses 1-10, wherein the domain control logic processes a remote indication to configure processing by the special-purpose core.
12. A method for controlling a connectivity system of a vehicle, the method comprising: evaluating a set of connectivity conditions associated with the vehicle; determining, based on the set of connectivity conditions, an operating mode for the connectivity system to communicate via a cellular network, wherein the connectivity system comprises a digital signal processor (DSP) having: a first operating mode associated with a first cellular network standard; and a second operating mode associated with a second cellular network standard; configuring the DSP of the connectivity system according to the determined operating mode; and communicating via a cellular network using the DSP.
13. The method of clause 12, wherein: the first cellular network standard has a first associated data rate; the second cellular network standard has a second associated data rate that is lower than the first associated data rate; and the DSP is capable of operating at the first associated data rate; the determined operating mode is the second operating mode; and configuring the DSP according to the second operating mode comprises configuring the DSP to operate at a lower data rate.
14. The method of any one of clauses 12-13, wherein the first cellular network standard has decreased range as compared to the second cellular network standard.
15. The method of any one of clauses 12-14, wherein: the first cellular network standard is one of baseline 5G, Long Term Evolution (LTE) Category 1, or LTE Category 4; and the second cellular network standard is one of 5G RedCap, LTE Category M, LTE Category M2, or Narrowband Internet of Things (NB-IoT).
16. The method of any one of clauses 12-15, wherein the connectivity system further comprises a subscriber identity module (SIM) that is used for communicating in both the first operating mode and the second operating mode.
17. The method of clause 16, wherein the SIM is one of an electronic SIM or an integrated SIM.
18. The method of any one of clauses 12-17, wherein the DSP is part of a software-defined radio of the connectivity system.
19. The method of any one of clauses 12-18, wherein the set of connectivity conditions comprises at least one of: an estimated or determined amount of data to be communicated; an estimated duration for which the vehicle will be operated; time of day; whether the vehicle is powered on; a state of charge of a power source of the vehicle; or cellular network information associated with a geographic location of the vehicle.
20. The method of any one of clauses 12-19, further comprising: performing a subsequent evaluation of the set of connectivity conditions associated with the vehicle; determining, based on the subsequent evaluation, to change the operating mode of the connectivity system to a different operating mode; and configuring the DSP of the connectivity system according to the different operating mode.
21. The method of clause 20, wherein the set of connectivity conditions comprises at least one of: signal strength of the connectivity system according to determined operating mode; available throughput according to the determined operating mode; network latency according to the determined operating mode; or congestion of the cellular network according to the determined operating mode.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

## Claims

1. A control unit for a vehicle, the control unit comprising:
a processing system comprising:
an application domain; and
a real-time domain comprising:
a general-purpose core; and
a special-purpose core; and
domain control logic that, when executed by the processing system, performs a set of operations comprising:
determining, based on a context for the vehicle, to perform a general-purpose computing task using the special-purpose core;
configuring the special-purpose core to perform general-purpose processing, thereby causing the special-purpose core to process the general-purpose computing task; and
receiving, from the special-purpose core, a general-purpose processing result.

2. The control unit of claim 1, wherein the general-purpose core contemporaneously generates a second general-purpose processing result for the general-purpose computing task.

3. The control unit of any one of claims 1 and 2, wherein the domain control logic is executed within the application domain.

4. The control unit of any one of claims 1-3, wherein it is determined to use the special-purpose core in response to a request to enlist computing resources from software executing in the application domain, and optionally wherein the request is received via an application programming interface associated with the domain control logic.

5. The control unit of any one of claims 1-4, wherein the set of operations further comprises:
configuring, in response to a change to the context for the vehicle, the special-purpose core to perform special-purpose processing, and optionally wherein the special-purpose processing comprises one or more of:
digital signal processing;
machine learning processing;
controller area network communication processing;
audio/video encoding/decoding; or
graphics processing.

6. The control unit of any one of claims 1-5, further comprising firmware for the special-purpose core that defines:
a first operating mode for special-purpose processing; and
a second operating mode for general-purpose processing.

7. The control unit of any one of claims 1-6, wherein the context for the vehicle comprises one or more of:
whether the vehicle is powered on;
whether the vehicle is idling;
whether the vehicle is in reverse;
whether the vehicle is operating under autonomous or semi-autonomous control; or
whether an in-vehicle infotainment system is in-use.

8. The control unit of any one of claims 1-7, wherein the domain control logic processes a remote indication to configure processing by the special-purpose core, and optionally wherein the processing system is at least a part of a system on a chip.

9. A method for controlling a connectivity system of a vehicle, the method comprising:
evaluating a set of connectivity conditions associated with the vehicle;
determining, based on the set of connectivity conditions, an operating mode for the connectivity system to communicate via a cellular network, wherein the connectivity system comprises a digital signal processor (DSP) having:
a first operating mode associated with a first cellular network standard; and
a second operating mode associated with a second cellular network standard;
configuring the DSP of the connectivity system according to the determined operating mode; and
communicating via a cellular network using the DSP, and optionally wherein the DSP is part of a software-defined radio of the connectivity system.

10. The method of claim 9, wherein:
the first cellular network standard has a first associated data rate;
the second cellular network standard has a second associated data rate that is lower than the first associated data rate; and
the DSP is capable of operating at the first associated data rate;
the determined operating mode is the second operating mode; and
configuring the DSP according to the second operating mode comprises configuring the DSP to operate at a lower data rate.

11. The method of any one of claims 9 and 10, wherein the first cellular network standard has decreased range as compared to the second cellular network standard, and optionally wherein:
the first cellular network standard is one of baseline 5G, Long Term Evolution (LTE) Category 1, or LTE Category 4; and
the second cellular network standard is one of 5G RedCap, LTE Category M, LTE Category M2, or Narrowband Internet of Things (NB-IoT).

12. The method of any one of claims 9-11, wherein the connectivity system further comprises a subscriber identity module (SIM) that is used for communicating in both the first operating mode and the second operating mode and optionally the SIM is one of an electronic SIM or an integrated SIM.

13. The method of any one of claim 9-12, wherein the set of connectivity conditions comprises at least one of:
an estimated or determined amount of data to be communicated;
an estimated duration for which the vehicle will be operated;
time of day;
whether the vehicle is powered on;
a state of charge of a power source of the vehicle; or
cellular network information associated with a geographic location of the vehicle.

14. The method of any one of claims 9-13, further comprising:
performing a subsequent evaluation of the set of connectivity conditions associated with the vehicle;
determining, based on the subsequent evaluation, to change the operating mode of the connectivity system to a different operating mode; and
configuring the DSP of the connectivity system according to the different operating mode.

15. The method of claim 14, wherein the set of connectivity conditions comprises at least one of:
signal strength of the connectivity system according to determined operating mode;
available throughput according to the determined operating mode;
network latency according to the determined operating mode; or
congestion of the cellular network according to the determined operating mode.
